# EUROPEAN PATENT SPECIFICATION

(11) **EP 3 430 885 B1**
(45) Date of publication and mention of the grant of the patent: **04.12.2019**
(21) Application number: 18188820.7
(22) Date of filing: 13.09.2016
(51) Int. Cl.: A01G 3/037

(54) **FOREIGN MATTER DETECTING MECHANISM OF ELECTRIC SCISSORS**
FREMDSTOFFDETEKTIONSMECHANISMUS FÜR EINE ELEKTRISCHE SCHERE
MÉCANISME DE DÉTECTION DE MATIÈRES ÉTRANGÈRES POUR CISEAUX ÉLECTRIQUES

(30) Priority: 14.09.2015 JP 2015181255; 01.09.2016 JP 2016170485
(43) Date of publication of application: 23.01.2019
(62) Divisional of application: 16001992.3
(73) Proprietor: Max Co., Ltd., Chuo-ku Tokyo 103-8502 (JP)
(72) Inventor: MORIMURA, Takashi, Tokyo 103-8502 (JP); TAKEUCHI, Kazuya, Tokyo 103-8502 (JP); OHKUBO, Shinichi, Tokyo 103-8502 (JP)
(74) Representative: Samson & Partner Patentanwälte mbB

(56) References cited:
- EP-A1- 2 540 460
- WO-A1-2011/025493
- KR-A- 20100 032 290

## Description

### TECHNICAL FIELD

The present invention relates to electric scissors that are used by electrically opening and closing blade sections.

### BACKGROUND

Electric scissors capable of cutting a cutting target such as branches by opening and closing a pair of blade sections using a driving force of a motor are used in pruning of trees or the like.

Incidentally, in fruit cultivation or the like, there is a case of forming a fruit tree shelf by installing a wire (metal wire) in a column. When performing a pruning work in the fruit cultivation using such a fruit tree shelf, in some cases, a worker may accidentally cut the wire. When cutting the wire, in some cases, a re-covering work of the wire may occur. In some cases, even when the wire is not cut, since the hard wire is pinched, the blade sections of the electric scissors may be nicked. When the electric scissors are continuously used in the state in which the blade sections are nicked, there is a problem that the blades are finally broken or the target may not be normally cut.

As a technique related to this problem, for example, FR 2,838,998 discloses electric scissors in which a dedicated conductive sensor and a dedicated circuit are provided in the blade section, and after the electrical contact is detected at the blade sections, the closing operation of the blade section is blocked. Although the technique disclosed in French Patent No. 2,838,998 is intended to prevent injury using a dedicated glove, if this technique is applied, by detecting the metal wire at the blade sections, there is a possibility that the erroneous cutting of the wire can be prevented.

### SUMMARY

In the technique of the above-mentioned FR 2,838,998, because it is necessary to provide a dedicated conductive sensor and a dedicated circuit in the blade section, there is a problem of an expensive manufacturing cost. Moreover, there are a problem of an increase in dimension of the device, a problem of a degradation of cutting ability due to the thickened blade section, a problem of difficulty in maintenance of the blade section, and a problem of a possibility of erroneous detection of the sensor when the sap or moisture adheres to the blade section. Scissors with torque detection are known from e.g. WO 2011/025493 A1.

Accordingly, an object of the invention is to provide a foreign matter detecting mechanism of the electric scissors that is capable of preventing erroneous cutting of the wire, even without providing a dedicated sensor or circuit.

The invention aims to solve the aforementioned problems with the features of claim 1. Preferred embodiments are disclosed in the dependent claims.

According to the invention according to claim 1, the foreign matter detecting unit for detecting that the blade section pinches the foreign matter is included, and the detection of foreign matter using the foreign matter detecting unit is performed based on angle information of the blade sections and the torque information of the motor. With such a configuration, it is possible to reliably cut the cutting target such as trees, and it is possible to detect the foreign matter when trying to cut a thin and hard thing such as a wire, without providing a dedicated sensor or circuit.

For example, when comparing the cutting target such as trees with the wire, the cutting target is relatively thick and soft, and the wire is thin and hard. Therefore, if the torque generated when trying to close the blade section is different from the normal value, since there is a possibility of cutting the wire, it is possible to perform the foreign matter detection.

In the detection of the foreign matter, the torque value of the motor may be used as it is, and the inclination (quantity of fluctuation of torque within a predetermined time) of the torque value of the motor may be used.

According to the invention the change rate of torque of the motor is used as the torque information of the motor. With such a configuration, since the rise of the torque can be captured when the foreign matter begins to be cut, it is possible to quickly detect the pinching of the foreign matter.

That is, since the cutting target such as trees is relatively thick and soft, when cutting the cutting target, after the blade section pierces through the skin of the cutting target, the torque values become maximum before and after cutting the vicinity of the center of the cutting target, thereafter, as the blade section is gradually closed, the torque value gradually decreases. That is, the rise of the torque tends to be gradual at the time of cutting of the cutting target.

Meanwhile, because the foreign matter such as the wire is relatively thin and hard, when cutting the foreign matter such as the wire, the torque rapidly increases just after the blade section and the wire come into contact with each other.

If the inclination of the torque value of the motor is used, since it is possible to capture the rise of the torque when the foreign matter begins to be cut, it is possible to quickly detect the pinching of the foreign matter.

In a preferred embodiment if the change rate of torque of the motor is less than a predetermined threshold, it is determined that the branch is being cut, and if the change rate of torque of the motor is equal to or greater than the predetermined threshold, it is determined that the foreign matter is pinched. Thus, it is possible to perform a control of determining that the branch is being cut when the rise of the torque is gentle, and determining of foreign matter in the case of sudden rise.

According to the invention the foreign matter detecting unit selects a threshold depending on a closing angle of the blade section from a predetermined threshold data, and compares the threshold to the torque information of the motor to perform the detection of the foreign matter. With such a configuration, it is possible to distinguish the thick branches and the thin wire from the angle of the blade section, and it is possible to distinguish the thin branches and the wire from the torque of the motor. Thus, it is possible to reliably detect the foreign matter.

For example, the threshold after the blade section is closed up to a predetermined angle may be set to be lower than the threshold before the blade section is closed up to a predetermined angle (or the threshold before the blade section is closed up to a predetermined angle is not set, and the threshold may not be checked if the threshold is not set). According to this configuration, when the torque value of the motor rises before the blade section is closed up to a predetermined angle, there is a high possibility of cutting the thick wood, the foreign matter is not detected. Meanwhile, when the torque value of the motor rises after the blade section is closed up to a predetermined angle, since there is a possibility of cutting the relatively thin and hard foreign matter such as the wire, the foreign matter can be detected.

In a preferred embodiment the torque value of the motor is estimated based on one of the current value, the voltage value or the rotational speed of the motor. According to this configuration, it is possible to detect an increase in torque, that is, the pinching of foreign matter, even without using a particular sensor or the like.

In a preferred embodiment the detection of foreign matter using the foreign matter detecting unit is invalid (nullified) until the blade section is determined to be closed up to a predetermined angle, and the detection of foreign matter is valid after the blade section is determined to be closed up to a predetermined angle. With such a configuration, until the blade section is closed up to the predetermined angle, even if the torque value of the motor increases, the detection of the foreign matter is not performed. Thus, an erroneous detection of the foreign matter does not occur, when cutting the cutting target such as trees. Further, when the torque value of the motor rises after the blade section is closed up to a predetermined angle, there is a possibility of cutting the relatively thin and hard foreign matter such as the wire, the foreign matter can be detected.

In a preferred embodiment the foreign matter detecting mechanism further includes a switching unit for switching two modes. The two modes include a foreign matter detection mode of executing the detection of the foreign matter, and a continuous execution mode of not performing the detection of foreign matter. With such a configuration, because it is possible to switch to the continuous execution mode when cutting, for example, the thin and hard branches, it is possible to avoid the problem of an erroneous detection of the pinching of foreign matter.

In a preferred embodiment, when the foreign matter detecting unit detects the foreign matter, the motor is stopped. With such a configuration, because the cutting operation is not performed any more when detecting the foreign matter, it is possible to avoid the problem of cutting the wire or nicking the blade section.

In a preferred embodiment when the foreign matter detecting unit detects the foreign matter, the motor is reversely rotated. With such a configuration, the cutting operation is not performed any more when detecting the foreign matter, and the foreign matter pinched between the blade sections is released. Thus, it is possible to avoid the problem of cutting the wire or nicking the blade section.

In a preferred embodiment when the foreign matter detecting unit detects the foreign matter, an abnormality (an alarm) is reported to a user. With such a configuration, the user can cope with the abnormality (the alarm) by immediately recognizing the foreign matter detection. For example, in the case of the electric scissors which do not stop the cutting operation when detecting the foreign matter, the user can select whether to continue the cutting operation.

In a preferred embodiment when the foreign matter detecting unit detects the foreign matter, the power path is physically cut off so that the power of the motor is not transmitted to the blade section. With such a configuration, since the cutting operation is not performed any more when detecting the foreign matter, it is possible to avoid the problem of cutting the wire or nicking the blade section.

In a preferred embodiment a clutch mechanism that adjusts the torque of the motor transmitted to the blade section is included, and when the foreign matter detecting unit detects the foreign matter, the clutch mechanism is made valid. With such a configuration, because an upper limit value of the torque is lowered when detecting the foreign matter, it is possible to prevent an occurrence of torque enough to cut the wire or nick the blade sections

### BRIEF DESCRIPTION OF THE DRAWINGS

Fig. 1 is a right side view of electric scissors;
Fig. 2 is a right side view illustrating an internal structure of the electric scissors;
Fig. 3 is a left side view illustrating the internal structure of the electric scissors;
Figs. 4A and 4B are explanatory views illustrating a cutting operation, wherein Fig. 4A is a diagram of an open state of blade sections, and Fig. 4B is a diagram of a closed state of the blade section;
Figs. 5A and 5C are explanatory views illustrating a movement of a manipulating member, wherein Fig. 5A is a diagram of a state of not manipulating the manipulating member, Fig. 5B is a diagram of a state of manipulating a first manipulating section, and Fig. 5C is a diagram of a state of manipulating a second manipulating section;
Fig. 6 is a block diagram illustrating a configuration of a foreign matter detecting mechanism of the electric scissors;
Fig. 7 is a flow chart illustrating the cutting operation of the electric scissors;
Fig. 8 is a waveform diagram illustrating a variation of a current value when cutting a cutting target or a foreign matter;
Fig. 9A is cross-sectional view of a connecting terminal of a cable, and Fig. 9B is a cross-sectional view of the connecting terminal of the cable according to a modified example;
Fig. 10 is a front view of the connecting terminal of the cable; and
Fig. 11 is a flow diagram illustrating the cutting operation of the electric scissors according to a modified example.

### DETAILED DESCRIPTION

Embodiments of the invention will be described with reference to drawings.

Electric scissors 10 according to the present embodiment is, for example, used in pruning of trees or the like to cut the cutting target, such as the branches by opening and closing a pair of blade sections 18 and 19 by the driving force of a motor 12 as a power source.

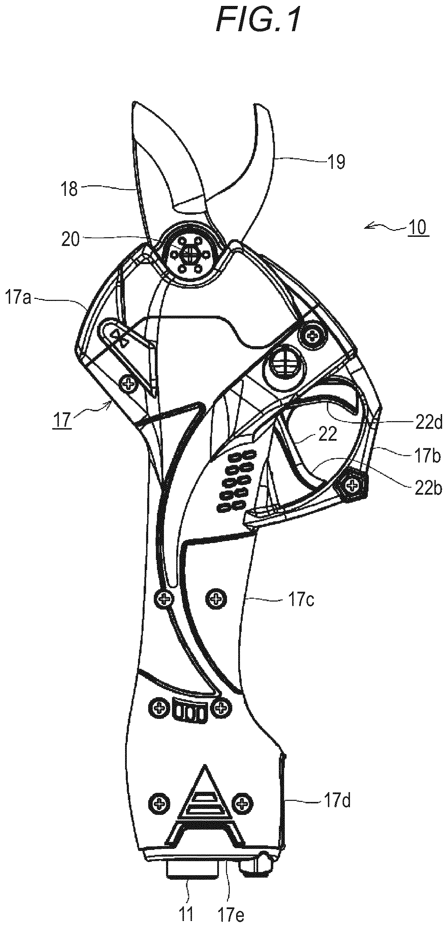

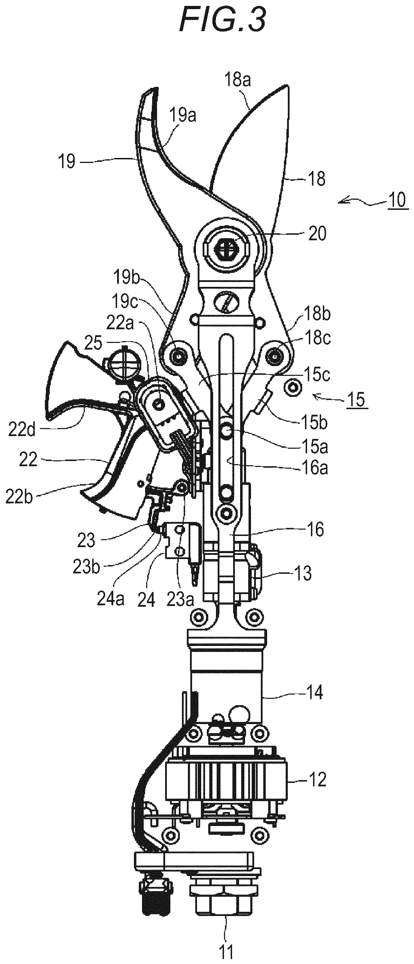

As illustrated in Figs. 1 to 3, the electric scissors 10 is equipped with a housing 17, a cable connector 11 provided at the rear end of the housing 17, a motor 12, a ball screw mechanism 13 for converting the rotary operation of the motor 12 into a linear operation, a support member 16 for guiding the rectilinear movement of the ball screw mechanism 13, a link mechanism 15 for converting the rectilinear movement of the ball screw mechanism 13 into the opening and closing operation of two blade sections 18 and 19, the first blade section 18 and the second blade section 19 actuated by the link mechanism 15, a manipulating member 22 provided as a manipulating section for controlling the motor 12, a oscillating member 23 that oscillates to follow the manipulating member 22, a micro-switch 24 in which a contact point is pressed by the oscillating member 23, a sensor 25 for detecting a rotation angle of the manipulating member 22, and a rotation detecting section 26 for detecting the rotation of the motor 12.

Although it is not particularly illustrated, the housing 17 is made up of two divided pieces, and houses the operating mechanism therein to cover substantially the whole machine. The housing 17 includes a link cover 17a as a portion that covers the link mechanism 15, a manipulating member guard 17b formed in a hoop shape to cover the periphery of the manipulating member 22, a grip 17c formed to be gripped by a user, and a rear end 17d provided in the rear portion of the grip 17c.

The link cover 17a is provided at the front end of the housing 17 to house the link mechanism 15, and the first blade section 18 and the second blade section 19 protrude from the front end.

The manipulating member guard 17b is provided at the rear lower side of the link cover 17a, and is provided at a boundary between the link cover 17a and the grip 17c. The manipulating member guard 17b is formed in a hoop shape, and is disposed to be able to hook the index finger into the hoop-shaped manipulating member guard 17b when the user grasps the grip 17c. The manipulating member 22 is exposed to be manipulated inside the manipulating member guard 17b. Although the details will be described later, the first manipulating section 22b (trigger) of the manipulating member 22 is exposed to the front (the grip 17c side) to be manipulated, and the second manipulating section 22d of the manipulating member 22 is exposed to the front (the link cover 17a side) to be manipulated.

The grip 17c is thinner than the link cover 17a, is formed to be slightly thinner than the rear end 17d, and has a shape that is easily grasped by the user. A ball screw mechanism 13 is built in the grip 17c.

The rear end 17d provided at the rear end of the housing 17 houses the motor 12 or the like, and a cable connector 11 is provided on a rear end surface 17e.

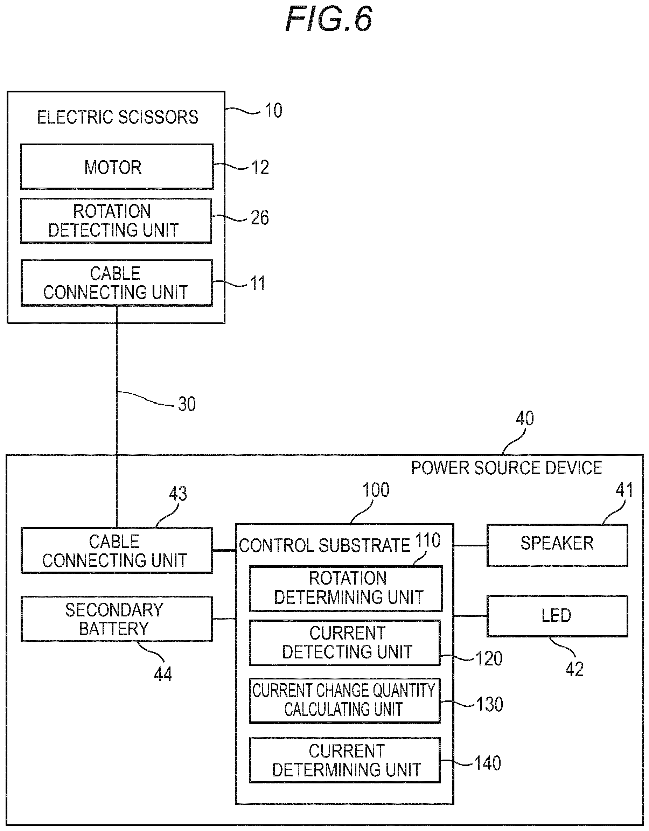

The cable connector 11 is a part for connecting a cable 30, and includes a terminal for connecting the electric power lines and signal lines. The cable 30 connected to the cable connecting unit 11 is connected to a power source device 40 (see Fig. 6). A power switch is provided in the power source device 40 or the cable 30, and by turning on the power switch, the power is supplied to the electric scissors 10 from the power source device 40 via the cable 30.

The motor 12 is a power source that operates to close the first blade section 18 and the second blade section 19, and is manipulated by the power supplied from the power source device 40. An output shaft of the motor 12 is connected to the ball screw mechanism 13 to be described later. A speed reduction mechanism 14 may be provided between the output shaft of the motor 12 and the ball screw mechanism 13, and may directly connect the output shaft of the motor 12 and the ball screw mechanism 13.

The ball screw mechanism 13 converts the rotary operation of the motor 12 into the linear operation. Although it is not particularly illustrated, the ball screw mechanism 13 includes a screw shaft that rotates by receiving the rotational force of the motor 12, and a nut that meshes with the screw groove of the screw shaft. Thus, when the screw shaft is rotated by the driving force of the motor 12, the nut is formed to linearly move along the screw shaft. A drive shaft 15a of the link mechanism 15 to be described later is connected to the nut, and the drive shaft 15a is formed to linearly move back and forth integrally with the nut.

The support member 16 is to guide the rectilinear movement of the ball screw mechanism 13. A guide groove 16a extending in the guide direction is provided in the support member 16, and the drive shaft 15a of the link mechanism 15 is engaged with the guide groove 16a. Therefore, the nut and the drive shaft 15a are adapted to move along the extending direction of the guide groove 16a.

The link mechanism 15 converts the rectilinear movement of the drive shaft 15a into the opening and closing operation of the first blade section 18 and the second blade section 19. The link mechanism 15 includes a first link 15b and a second link 15c which are pivotally connected by the drive shaft 15a. The first link 15b has one end connected to the drive shaft 15a, and the other end connected to the first blade section 18 via the connecting shaft 18c. The second link 15c has one end connected to the drive shaft 15a, and the other end connected to the second blade section 19 via the connecting shaft 19c.

The first blade section 18 and the second blade section 19 are pivotally supported by the blade shaft 20 as a fulcrum, and are combined so as to intersect with each other in the blade shaft 20. A blade is formed in a cutting portion 18a of a tip side of the first blade section 18 than the blade shaft 20, and a base portion 18b of the base side than the blade shaft 20 is pivotally connected to the first link 15b via a connecting shaft 18c. Similarly, a blade is formed in a cutting portion 19a of the tip side of the second blade section 19 than the blade shaft 20, and a base portion 19b of the base side than the blade shaft 20 is pivotally connected to the second link 15c via the connecting shaft 19c.

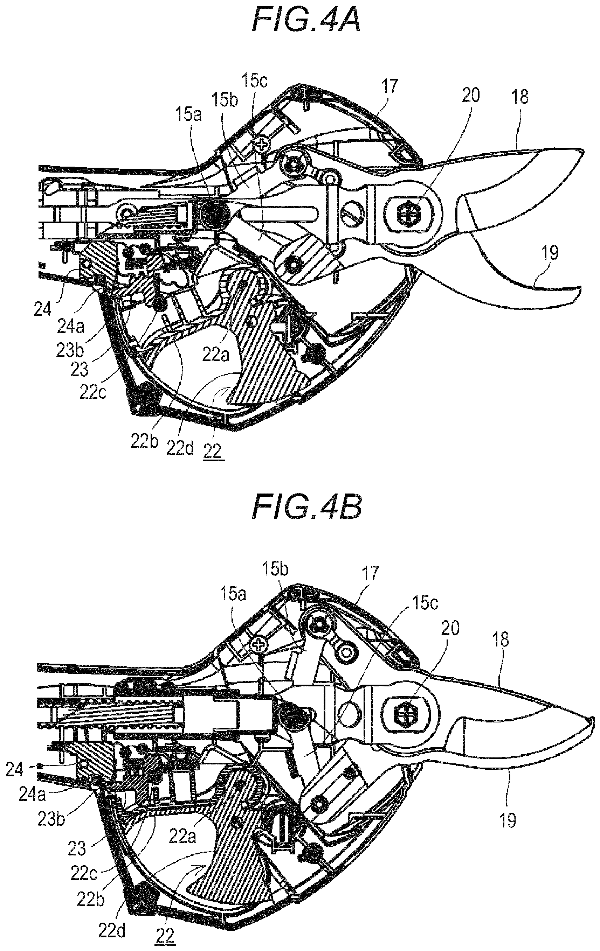

As illustrated in Figs. 4A and 4B, the aforementioned link mechanism 15, the first blade section 18 and the second blade section 19 are actuated by the rectilinear movement of the ball screw mechanism 13.

More specifically, when the drive shaft 15a moves in the direction of coming close up to the blade shaft 20, the first link 15b and the second link 15c are actuated in the opening direction. Thus, the base portions 18b and 19b of the first blade section 18 and the second blade section 19 are displaced in a direction away from each other, the cutting portions 18a and 19a of the first blade section 18 and the second blade section 19 mutually rotate in the closing direction to perform the cutting operation.

Meanwhile, when the drive shaft 15a moves in a direction away from the blade shaft 20, the first link 15b and the second link 15c are actuated in the closing direction. Accordingly, the base portions 18b and 19b of the first blade section 18 and the second blade section 19 are displaced in the direction of coming close to each other, and the cutting portions 18a and 19a of the first blade section 18 and the second blade section 19 mutually rotate in the opening direction.

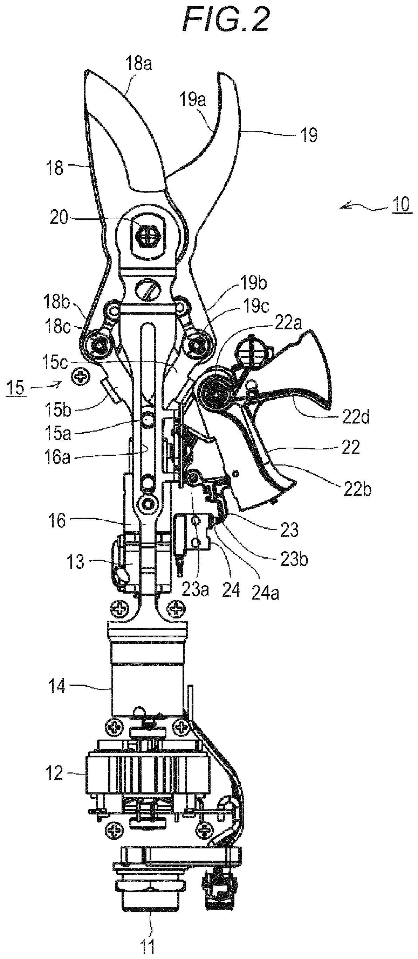

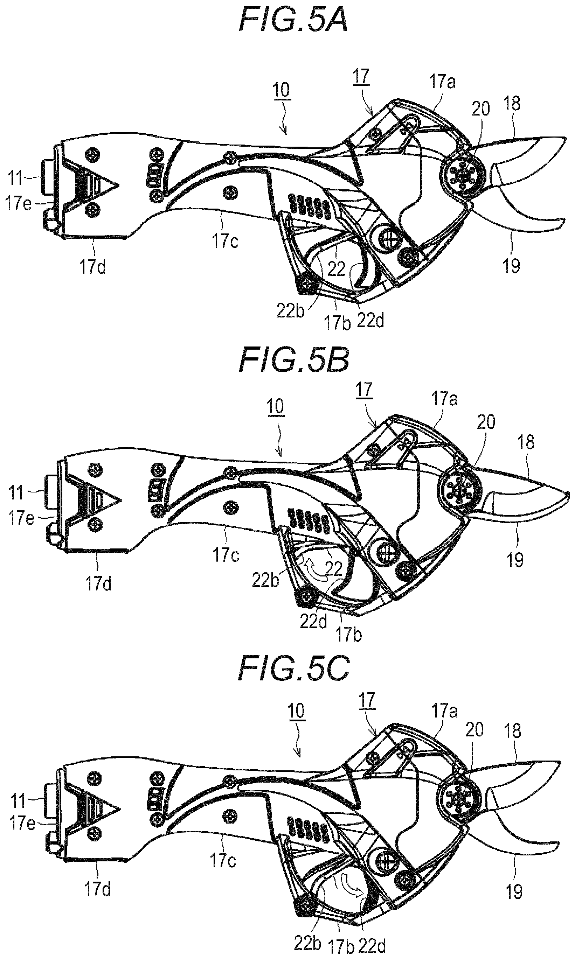

The manipulating member 22 according to the present embodiment is pivotally mounted around a shaft 22a. The manipulating member 22 has a substantially L-shape in the side view as illustrated in Fig. 2 or the like, and includes the first manipulating section 22b and the second manipulating section 22d extending in the respective different directions from the position where the shaft 22a is provided. The first manipulating section 22b is a manipulating section for controlling the operation of the motor 12, and performs (control) the opening and closing (cut) operations of the first blade section 18 and the second blade section 19 by controlling the operation of the motor 12. The second manipulating section 22d performs an auxiliary operation (for example, switching of the operating mode). The first manipulating section 22b and the second manipulating section 22d are disposed to face each other, and are exposed to the inside of the manipulating member guard 17b to be manipulated. Thus, when a finger is inserted between the first manipulating section 22b and the second manipulating section 22d and the finger is moved backward (the grip 17c side) with respect to the shaft 22a as illustrated in Fig. 5B, the first manipulating section 22b can be manipulated. When the finger is moved forward (the link cover 17a side) with respect to the shaft 22a as illustrated in Fig. 5C, the second manipulating section 22d can be manipulated. When the first manipulating section 22b or the second manipulating section 22d is manipulated, the manipulating member 22 rotates around the shaft 22a. Thus, when the first manipulating section 22b is pulled to come close up to the grip 17c side, the electric scissors 10 perform the opening and closing operation of the first blade section 18 and the second blade section 19, and when the second manipulating section 22d is pushed away from the grip 17c side, the electric scissors 10 perform the auxiliary operation. The first manipulating section 22b and the second manipulating section 22d are disposed to be relatively immovable with each other, when the first manipulating section 22b (the second manipulating section 22d) is manipulated, the second manipulating section 22d (the first manipulating section 22b) also moves in the same direction as the first manipulating section 22b (the second manipulating section 22d) in conjunction with this manipulation. Therefore, the first manipulating section 22b and the second manipulating section 22d are individually manipulated rather than being manipulated at the same time, and when manipulating the first manipulating section 22b and when manipulating the second manipulating section 22d, the manipulating member 22 is rotated in the different directions.

A roller 22c as illustrated in Figs. 4A and 4B is provided inside the first manipulating section 22b. The roller 22c is used to push an oscillating member 23 to be described later.

The oscillating member 23 is a member that oscillates to follow the rotation of the manipulating member 22 when the first manipulating section 22b of the manipulating member 22 is manipulated. The oscillating member 23 is allowed to oscillate around the oscillating shaft 23a, and is adapted to oscillate by the roller 22c when the manipulating member 22 is rotated. The oscillating member 23 is provided with a pressing portion 23b to face a contact point 24a of a micro switch 24 to be described later, and when oscillated by the roller 22c, the pressing portion 23b pushes the contact point 24a of the micro switch 24.

The micro switch 24 is to detect that the first manipulating section 22b of the manipulating member 22 is manipulated. As described above, when the first manipulating section 22b of the manipulating member 22 is manipulated, since the oscillating member 23 is configured to turn on the micro switch 24, by detecting the turning on-off of the micro switch 24, it is possible to determine whether the first manipulating section 22b of the manipulating member 22 is manipulated.

The sensor 25 is to detect the rotational angle of the manipulating member 22. As the sensor 25, as long as it is possible to detect the manipulation of the manipulating member 22, anything may be used. However, for example, it is possible to use a potentiometer that is connected to the shaft 22a. When using the potentiometer, it is possible to specifically grasp the manipulation quantity of the manipulating member 22.

The rotation detecting section 26 detects the rotation of the motor 12, and is made up of, for example, a hole IC or the like. When the rotation detecting section 26 is made up of the hole IC, by mounting a magnet to a rotating part such as a shaft or a wheel of the motor 12, and by detecting the presence or absence of the magnet using the hole IC, the rotation of the motor 12 is detected. The rotation of the motor 12 detected by the rotation detecting section 26 is used by being transmitted to the power source device 40 via the cable 30.

The operation of the electric scissors 10 is controlled by a control device (not illustrated) that is built in the electric scissors 10 or the power source device. When the first manipulating section 22b of the manipulating member 22 is manipulated, and turning-on of the micro switch 24 is detected, the control device detects the rotational angle of the manipulating member 22 by the sensor 25. Further, the motor 12 is rotated in a normal direction in accordance with the detected angle to operate the two blade sections 18 and 19 in the closing direction. When the first manipulating section 22b of the manipulating member 22 is fully manipulated, the two blade sections 18 and 19 enter a fully closed state. When the first manipulating section 22b is released, the manipulating member 22 is returned to the initial position by a spring (not illustrated). When the sensor 25 detects that the manipulating member 22 is returned to the initial position, the sensor 25 sends a control signal to the control device. The control device which has received the control signal actuates the two blade sections 18 and 19 until the maximum opening angle, by rotating the motor 12 in the reverse direction. Thus, the two blade sections 18 and 19 are returned to the initial position. At the same time, since the manipulating member 22 is returned to the initial position and the micro switch 24 is turned off, the stop of the two blade sections 18 and 19 is maintained at the maximum opening angle.

As illustrated in Fig. 6, the power source device 40 which supplies power to the electric scissors 10 includes a cable connector 43, a secondary battery 44, a control board 100, a speaker 41 and an LED 42.

The cable connector 43 is a part for connecting the cable 30, and includes a terminal for connecting the electric power lines and signal lines. That is, the cable connector 43 connects the electric scissors 10 and the power source device 40 using the cable 30.

The secondary battery 44 stores the electric power to be supplied to the electric scissors 10. The secondary battery 44 is also used to drive the power source device 40.

The control board 100 controls the operation of the electric scissors 10, and has a CPU, a memory, and a control circuit. In the present embodiment, the control board 100 constitutes the foreign matter detecting unit for detecting that the two blade sections 18 and 19 pinch the foreign matters. The control board 100 also has various functions in addition to the foreign matter detecting unit, but the description of the functions will not be provided.

The control board 100 constitutes the aforementioned foreign matter detecting unit, by including a rotation determining section 110, a current detecting section 120, a current change quantity calculating section 130, and a current determining section 140.

The rotation determining section 110 acquires a rotation signal of the motor 12 transmitted from the rotation detecting section 26 of the electric scissors 10, and checks whether or not the rotation quantity of the motor 12 (the number of rotation which the motor 12 rotates) reaches a predetermined rotation quantity. The rotation quantity of the motor 12 is reset when the two blade sections 18 and 19 are set at the initial position, and thereafter, is measured by counting up each time the rotation detecting section 26 acquires the rotation signal of the motor 12. The rotation determining section 110 determines that the two blade sections 18 and 19 are closed up to the predetermined angle, when the rotation quantity of the motor 12 reaches a predetermined rotation quantity.

The current detecting section 120 detects a current value to be supplied to the motor 12, by measuring the current value supplied to the electric scissors 10. The current value measured by the current detecting section 120 is used to calculate a torque value of the motor 12, in other words, the current value is used to detect the foreign matter.

The current change quantity calculating section 130 calculates the change quantity of the current value within a predetermined time (e.g., 1 ms), based on the current value detected by the current determining section 120. Thus, the inclination (the quantity of fluctuation of torque within a predetermined time, i.e., a change rate of the torque) of the torque value of the motor 12 within a predetermined time is estimated.

The current determining section 140 acquires the information about the rotation quantity of the motor 12 from the rotation determining section 110, and acquires the torque information (the change rate of torque in the present embodiment) of the motor 12 from the current change quantity calculating section 130. Further, the current determining section 140 determines the possibility of pinching of foreign matter based on the information. Specifically, when the closing angle of the two blade sections 18 and 19 is estimated by the information acquired from the rotation determining section 110, the current determining section 140 selects a particular threshold corresponding to the closing angle from a predetermined threshold data. Further, the particular threshold is compared with the torque information of the motor 12 acquired from the current change quantity calculating section 130. When the change quantity of the current value calculated by the current change quantity calculating section 130 exceeds the particular threshold, the current determining section 140 determines that the foreign matter is pinched to execute a predetermined error process.

The threshold data for comparison with the torque information of the motor 12 is set in advance in the machine in accordance with the intended use or the like of the electric scissors 10. The threshold included in the threshold data is managed by being attached to the closing angle (the rotation quantity of the motor 12) of the blade sections 18 and 19. As the threshold, at least two types of different thresholds are used by being switched. For example, the threshold is used by being switched depending on the closing angle (the rotation quantity of the motor 12) of the blade sections 18 and 19. That is, in the range of less than 60 rotations of the motor 12, a threshold A is used, and in the range of equal to or more than 60 rotations of the motor 12, a threshold B is used.

When the foreign matter detection is not performed in a case where the closing angle (the rotation quantity of the motor 12) of the blade sections 18 and 19 is in the predetermined range, "no threshold" in this predetermined range may be set. For example, by setting only the threshold after the blade sections 18 and 19 are closed up to a predetermined angle, rather than setting the threshold before the blade sections 18 and 19 closed up to a predetermined angle, when the threshold is not set, the threshold may not be checked by the current determining section 140. Thus, when a torque value of the motor 12 rises before the blade sections 18 and 19 are closed up to a predetermined angle, since there is a high possibility of cutting the thick wood, it is not detected as a foreign matter. Meanwhile, when a torque value of the motor 12 rises after the blade sections 18 and 19 are closed up to a predetermined angle, since there is a possibility of cutting the relatively thin and hard foreign matter such as an wire, it can be detected as a foreign matter.

The speaker 41 outputs a buzzer sound at the time of power-on, and a buzzer sound at the time of an error.

An LED 42 performs an operating mode of the electric scissors 10 and an error display.

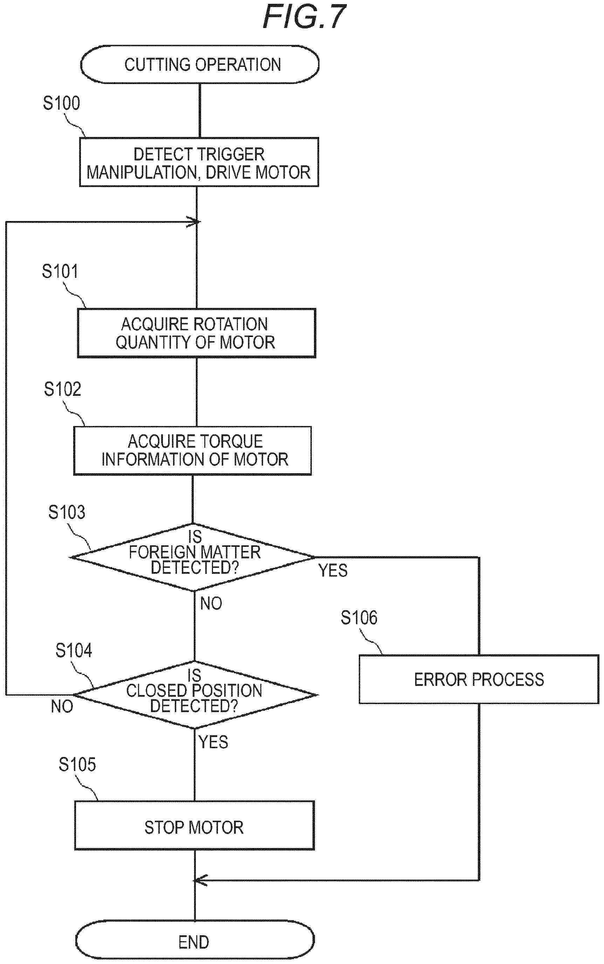

Next, the cutting operation and the foreign matter detecting operation of the electric scissors 10 will be described referring to Fig 7.

First, at step S100 illustrated in Fig. 7, the manipulating member 22 is manipulated, and the motor 12 starts driving.

At step S101, the rotation determining section 110 acquires the rotation quantity of the motor 12. Further, the process proceeds to step S102.

At step S102, the current detecting section 120 measures a current value at regular intervals, and the current change quantity calculating section 130 calculates the change quantity of the current value within a predetermined time, based on this current value. Further, the process proceeds to step S103.

At step S103, the current determining section 140 acquires the information about the quantity of rotation of the motor 12 from the rotation determining section 110, and estimates the closing angle of the two blade sections 18 and 19. Further, the threshold is selected from a preset threshold data based on the closing angle. The torque information (the change quantity of the current value within a predetermined time) of the motor 12 is acquired from the current change quantity calculating section 130. It is checked whether or not the change quantity of the current value exceeds the threshold. If the change quantity of the current value exceeds the threshold, it is determined that the foreign matter is pinched, and the process proceeds to step S106. Meanwhile, when the change quantity of the current value does not exceed the threshold, the process proceeds to step S104.

When the process proceeds to step S104, it is checked whether the two sheets of the blade sections 18 and 19 are in the completely closed state. When the two blade sections 18 and 19 are detected to be in the completely closed state, the process proceeds to step S105. Meanwhile, if the two blade sections 18 and 19 are not in the completely closed state, the flow returns to step S101.

When the process proceeds to step S105, the motor 12 is stopped to complete the process.

When the process proceeds to step S106, i.e., when it is determined that the foreign matter is pinched at step S103, a predetermined error process is performed. The error process according to this embodiment is a process of stopping the motor 12 and reversely rotating the motor 12. By performing this process, even when the foreign matter such as a wire is pinched, the blade sections 18 and 19 are opened before cutting the foreign matter.

As described above, the foreign matter detecting mechanism of the electric scissors 10 in the present embodiment performs the detection of the foreign matter, by monitoring the angle information of the blade sections 18 and 19 and the torque information of the motor 12. The detection mechanism is based on the following point of interest.

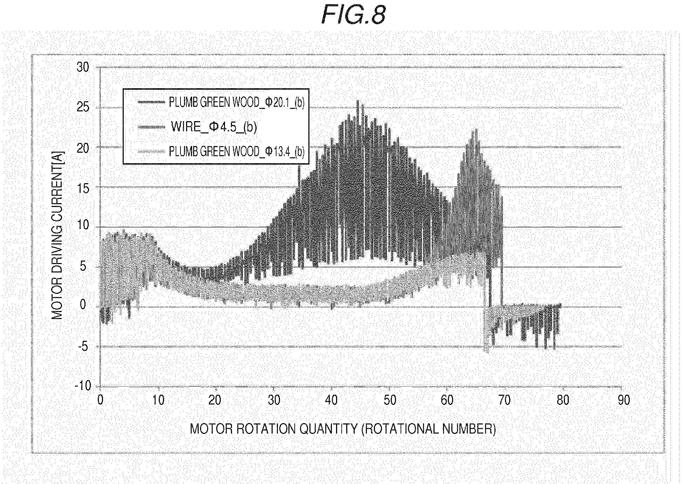

That is, when cutting the thick branches as illustrated in Fig. 8, the torque of the motor 12 begins to increase at the timing when the blade sections 18 and 19 began to be closed, and the torque of the motor 12 becomes the maximum in the vicinity of a predetermined angle (referring to a waveform in the vicinity of the rotation quantity of motor of "50" in X of Fig. 8). Meanwhile, when the foreign matter such as wire is cut, the torque of the motor 12 rapidly increases just before the blade sections 18 and 19 are closed, and becomes the same maximum value as X when cutting the thick branches (referring to a waveform in the vicinity of the rotation quantity of motor of "70" in Y of Fig. 8).

When cutting a conventional thin branch as illustrated in a waveform Z, the timing at which the torque of the motor 12 increases is in the vicinity of the motor rotation quantity "70" which is equivalent to the time of cutting the wire, but the torque does not become too large.

As illustrated by the experimental results, at the time of cutting the thin and hard wire and cutting the thin living trees, even if the varying timing of the torque of the motor 12 is the same, the maximum torques are different.

When cutting the relatively thick and soft living trees, and when cutting the thin and hard wire, even if the maximum value of the torque of the motor 12 is the same, the varying timings of the torque are different.

The present inventors switch the threshold of the torque for determining the foreign matter in accordance with the angle of the blade sections 18 and 19 by paying attention to a difference between the torque value and the variation timing different for each cutting target.

In the present embodiment, the respective different thresholds are set in the vicinity of the motor rotation quantity "50" in which the torque becomes the maximum when cutting the thick branches, and in the vicinity of the motor rotation quantity "70" in which the torque value becomes the maximum when cutting the wire. Therefore, even if the torque value increases when cutting the thick branches, the working is not stopped by an erroneous detection of the foreign matter. Further, since the foreign matter is reliably detected, the wire or the scissors are not damaged.

Further, validity or invalidity (nullity) of the foreign matter detection operation may be switched based on the timing at which the blade sections 18 and 19 are closed up to a predetermined angle, and by setting the threshold in a predetermined angle or more to an extremely large value, at the timing at which the blade sections 18 and 19 are closed up to a predetermined angle, the threshold may be set to make the foreign matter detecting operation substantially invalid (nullified).

For example, until the rotation quantity of the motor 12 becomes a predetermined rotation quantity (e.g., "60"), the threshold may not be set, and when the rotation quantity of the motor 12 becomes a predetermined rotation quantity (e.g., "60"), the threshold may be set. In this way, at the timing (in the vicinity of the rotation quantity of "50" of the motor 12) at which the torque increases when cutting the thick branches, since the threshold is not set, the detection of the foreign matter is not substantially performed, and an erroneous detection of foreign matter does not occur. Meanwhile, since the detection of the foreign matter is performed at the timing (in the vicinity of the rotation quantity of "70" of the motor 12) at which the torque increases when cutting the wire, it is possible to reliably detect the foreign matter.

By monitoring the change quantity in the torque rather than the torque value of the motor 12, it is possible to enhance the effect of the foreign matter detection. That is, when cutting the branches as illustrated in Fig. 8, since the blade section reliably penetrates the branch with the closing operation of the blade sections 18 and 19, the torque of the motor 12 begins to relatively gradually increase. However, when cutting the foreign matter such as the wire, since the blade sections 18 and 19 cannot penetrate the branch, the torque rapidly increases. By paying attention to the change rate of different torque values for each cutting target, it is possible to improve the accuracy of the foreign matter detection. Further, since the rising of the torque when the blade sections 18 and 19 come into contact with the cutting target is determined, it is possible to suppress an influence on the electric scissors 10 or the wire to a minimum.

At this time, if the change rate of the torque of the motor 12 is less than the predetermined threshold, it is determined to cut the branches, and if the change rate of the torque of the motor 12 is equal to or greater than a predetermined threshold, it is determined that the foreign matter is pinched. The predetermined threshold to be compared with the change rate of the torque may be a fixed value or may be an upper limit value waveform (or a lower limit value waveform). If the predetermined threshold is a fixed value, the fixed value may be compared to the change quantity of the torque of the motor 12 within a predetermined time. If the predetermined threshold is an upper limit value waveform (or the lower limit value waveform), the upper limit value waveform (or the lower limit value waveform) may be compared with the change waveform of the torque of the motor 12.

As illustrated in the waveform Z, when cutting the normal thin branches, since the torque of the motor 12 is not too large, an erroneous detection of the foreign matter does not occur.

However, depending on the type of branches, when cutting the thin and hard branches, it is not said that there is no possibility that the thin and hard branches may be determined as the foreign matter such as the wire. Therefore, the electric scissors 10 according to the present embodiment has a foreign matter detection mode of executing the detection of the foreign matter, and a continuous execution mode of not executing the detection of the foreign matter. In the continuous execution mode, the aforementioned step S102, step S103, and step S106 are not executed in the above flow diagram, and the foreign matter detection is not performed even after the blade sections 18 and 19 are closed up to a predetermined angle. Therefore, when cutting the thin and hard branches, by switching to the continuous execution mode, it is possible to avoid an erroneous detection of the foreign matter.

When switching the aforementioned modes, the manipulating member 22 is manipulated in a direction different from the time of the cutting operation. That is, the second manipulating section 22d of the manipulating member 22 is manipulated. When the second manipulating section 22d of the manipulating member 22 is manipulated, this manipulation is detected by the sensor 25. When the sensor 25 detects the manipulation of the second manipulating section 22d, the sensor 25 sends a control signal to the control device. The control device which has received the control signal changes the operation mode. Specifically, the foreign matter detection mode is shifted to the continuous execution mode, and the continuous execution mode is shifted to the foreign matter detection mode. The selected mode is maintained until the second manipulating section 22d of the manipulating member 22 is manipulated again, and the selected mode is applied in subsequent manipulations.

Incidentally, the operating mode is adapted to be restored even after the power source of the electric scissors 10 is turned off. That is, when the power source of the electric scissors 10 is turned off in the state of foreign matter detection mode, at the next time of turning on the power source, the electric scissors 10 is adapted to start up in the state of foreign matter detection mode. Also, when turning off the power source of the electric scissors 10 in the continuous execution mode state, at the next time of turning on the power source, the electric scissors 10 is adapted to start up in the continuous execution mode state.

In the present embodiment, the operating mode is switched by the second manipulating section 22d of the manipulating member 22, but is not limited thereto, and the operating mode may be switched by other operating unit. By turning off and restarting the power source, the mode may be shifted to another mode.

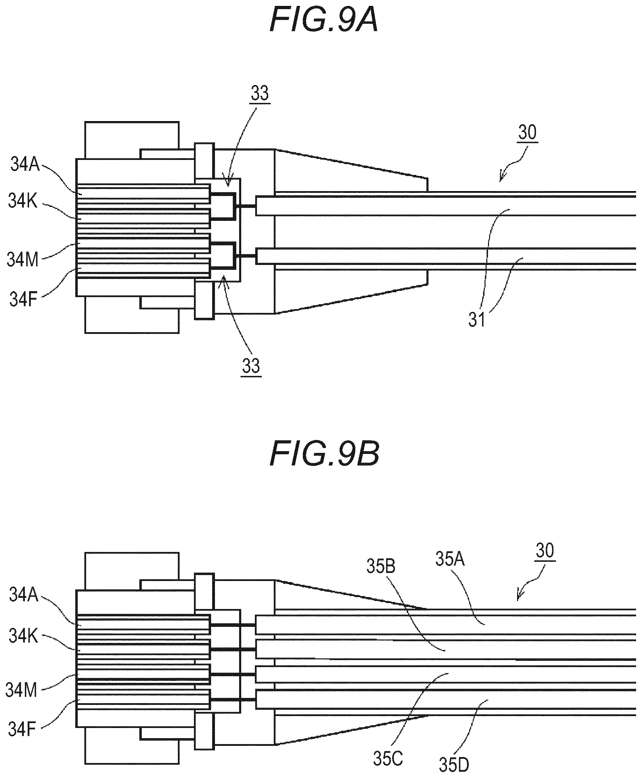

Incidentally, the cable 30 used in the electric scissors 10 is provided with a connecting terminal 32 as illustrated in Figs. 9A and 9B. The connecting terminal 32 of the cable 30 is provided with a plurality of female pins 34A to 34N, and the female pins 34A to 34N may be connected to the cable connector 11 of the electric scissors 10 and the cable connector 43 of the power source device 40.

A plurality of core wires 31 pass through the interior of the cable 30, and are used as signal lines or the electric power lines, respectively. As illustrated in Fig. 9A, in the core wire 31 according to the present embodiment, at least one of the core wires 31 forms a branch section 33 by being diverged into two sections in the vicinity of the connecting terminal 32. The diverged core wires 31 are electrically connected to female pins, respectively. Thus, in the example illustrated in Fig. 9A, the female pin 34A and the female pin 34K are used to transmit the same signal or electric power, and the female pin 34M and the female pin 34F are used to transmit the same signal or electric power. In this manner, by providing a plurality of female pins in one of the signal lines or electric power lines, even if a contact failure occurs in the terminal sections (female pin, male pin), it is possible to maintain the function using another terminal section (female pin, male pin). Further, by increasing the terminal section that transmits the same signal or electric power, it is possible to reduce the contact resistance and prevent malfunction.

In the above-described example, although the core wire 31 is diverged, instead of this, as illustrated in Fig. 9B, a plurality of core wires 35A to 35D may be provided in one signal line or electric power line. That is, in the example illustrated in Fig. 9B, the female pin 34A and the female pin 34K are used to transmit the same signal or electric power, and the corresponding core wire 35A and the core wire 35B are used to transmit the same signal or electric power. Further, the female pin 34M and the female pin 34F are used to transmit the same signal or electric power, and the corresponding core wire 35C and the core wire 35D are used to transmit the same signal or electric power. Even in such a configuration, it is possible to acquire the same effect as the example illustrated in Fig. 9A.

In place of the examples illustrated in Fig. 9A and Fig. 9B or in conjunction with the examples illustrated in Fig. 9A and Fig. 9B, the arrangement of the female pins 34A to 34N may be changed in consideration of the tolerance to the contact resistance. That is, because the resistance value of the resistors connected to respective signal lines or the electric power lines are different, in the circuit configuration, the tolerance to the contact resistance differs depending on the respective signal lines or the electric power lines. The arrangement of the female pins 34A to 34N may be set in consideration of the tolerance to the contact resistance.

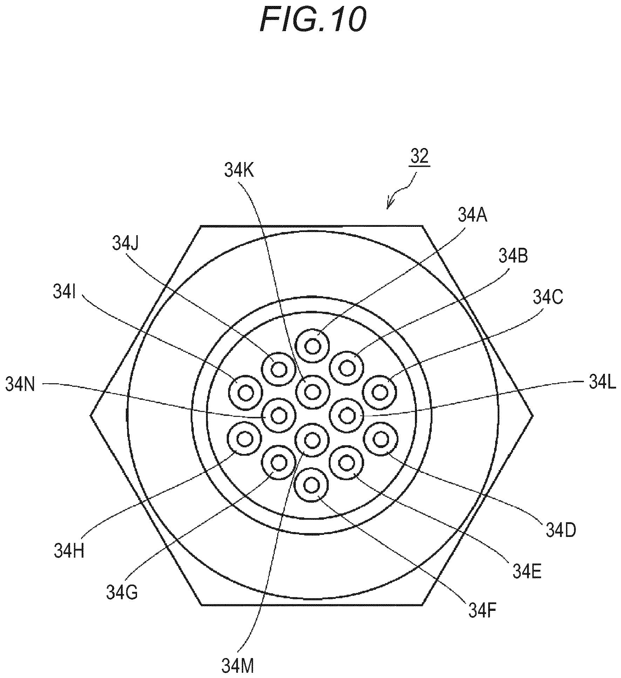

Specifically, as illustrated in Fig. 10, when there are ten female pins 34A to 34J that are disposed outside, and the four female pins 34K to 34N that are disposed inside, the female pins having the large tolerance to the contact resistance are disposed outside, and the female pins having the small tolerance to the contact resistance are disposed inside. By such an arrangement, it is possible to provide a structure in which a contact failure or breakdown hard to occur. That is, when the load is applied to the connecting terminal 32 of the cable 30, the outer female pins 34A to 34J are susceptible to load. Thus, by connecting the signal lines or the electric power lines having the large tolerance to the contact resistance with respect to the outer female pins 34A to 34J susceptible to the load, it is possible to minimize the influence of sliding abrasion or the like.

As a specific arrangement, a method of sequentially allocating the inner female pins 34K to 34N from the signal line or the electric power line having the small tolerance to the contact resistance, and allocating the remaining signal line or electric power line to the outer female pins 34A to 34J is considered.

As another arrangement, a method of allocating the signal line having the small tolerance to the contact resistance to the inner female pins 34K to 34N, and allocating the remaining signal lines and the electric power lines to the outer female pins 34A to 34J is considered. The arrangement of the electric power line on the outside in this arrangement is performed in consideration of the property that the contact resistance is hard to increase as compared to the signal lines, since a corrosion substance caused by sliding friction is hard to deposit on the electric power lines than the signal lines.

As illustrated in Fig. 9A and Fig. 9B, when a plurality of female pins correspond to a single signal line or an electric power line, it is desirable to dispose at least one female pin inside. By disposing the two female pins inside if possible, it is possible to effectively prevent an occurrence of malfunction.

As described above, according to this embodiment, a detection of the foreign matter is performed by comparing the torque information of the motor 12 to the threshold that is set in accordance with the angle of and the blade sections 18 and 19. With such a configuration, it is possible to reliably cut the cutting target such as trees, and when trying to cut the thin and hard things, such as a wire, the foreign matter can be detected.

That is, when cutting the cutting target such as trees, since the cutting target such as trees are relatively thick, the torque becomes the maximum before the blade sections 18 and 19 are completely closed. Thereafter, the torque becomes smaller as the blade sections 18 and 19 are closed. Meanwhile, when cutting the thin and hard foreign matter such as a wire, the torque becomes the maximum just before the blade section is completely closed.

Furthermore, the present inventors switch the validity or the invalidity (nullity) of the foreign matter detection operation based on the timing at which the blade sections 18 and 19 are closed up to a predetermined angle, by paying attention to a difference of the torque fluctuation for each cutting target. Thus, because the foreign matter detecting unit does not detect the maximum torque when cutting the cutting target, but detects the maximum torque when cutting the foreign matter such as a wire, it is possible to detect the pinching of the foreign matter by detecting an abnormal increase of the torque.

Moreover, it is possible to detect the foreign matter without providing a dedicated sensor or circuit.

A foreign matter detection mode for performing the detection of the foreign matter, and the continuous execution mode for not performing the detection of the foreign matter are included, and a switching unit for switching these two modes is included. With such a configuration, since it is possible to switch to the continuous execution mode when cutting, for example, thin and hard branches, it is possible to avoid the problem of an erroneous detection of the pinching of the foreign matter.

When the foreign matter detecting unit detects the foreign matter, the motor 12 is stopped. With such a configuration, since the cutting operation is not performed any more when detecting the foreign matter, it is possible to avoid the problem that the wire is cut or the blade sections 18 and 19 are nicked.

When the foreign matter detecting unit detects the foreign matter, the motor 12 is reversely rotated. With such a configuration, the cutting operation is not performed any more when detecting the foreign matter, and the foreign matter pinched between the blade sections 18 and 19 is released. Thus, it is possible to avoid the problem that the wire is cut or the blade sections 18 and 19 are nicked.

In the above-described embodiment, the inclination (quantity of fluctuation of torque within a predetermined time) of the torque value of the motor 12 is estimated using the current value of the motor 12, thereby performing the detection of foreign matter. However, the embodiment of the invention is not limited thereto, the torque value of the motor 12 may be estimated based on the voltage value of the motor 12 or the rotational speed of the motor 12, rather than the current value of the motor 12. Further, when performing the detection of the foreign matter, the detection of the foreign matter may be performed by utilizing the torque value (the current value detected by the current detecting section 120) of the motor 12 as it is, without calculating the inclination of the torque value of the motor 12. However, if the inclination of the torque value of the motor 12 is used, since the rise of the torque can be captured when beginning to cut the foreign matter, it is possible to quickly detect the pinching of the foreign matter.

In the aforementioned embodiment, as a method of determining that the blade sections 18 and 19 are closed up to a predetermined angle, a method of measuring the quantity of rotation of the motor 12 is used. However, the embodiment of the invention is not limited thereto. For example, the operating time of the motor 12 is measured, and when the operating time of the motor 12 reaches a predetermined time, the blade sections 18 and 19 may be determined to be closed up to the predetermined angle. Further, the position of the drive shaft 15a of the link mechanism 15 is detected, and when the drive shaft 15a of the link mechanism 15 is moved up to a predetermined position, the blade sections 18 and 19 may be determined to be closed up to the predetermined angle.

In the aforementioned embodiment, as the error process when detecting the foreign matter, the motor 12 is stopped, and the motor 12 is reversely rotated at the same time. However, the embodiment of the invention is not limited thereto, and the motor 12 may be simply stopped. Further, the abnormality (the alarm) may be reported to a user by the speaker 41 or the LED 42. If the abnormality (the alarm) is reported to the user, the user can cope with the abnormality (the alarm) by immediately recognizing the foreign matter detection. For example, it is possible to allow a user to select whether to continue the cutting operation.

In the aforementioned embodiment, as a method for stopping the cutting operation in the error process, the cutting operation is stopped by controlling the motor 12. However, the embodiment of the invention is not limited thereto.

For example, when the foreign matter detecting unit detects the foreign matter, a power path may be physically cut off so that the power of the motor 12 is not transmitted to the two blade sections 18 and 19. Even in such a configuration, since the cutting operation is not performed any more when detecting the foreign matter, it is possible to avoid the problem that the wire is cut, or the blade section is nicked. The cutting-off of the power path may be, for example, performed by releasing the engagement of gears or the like.

As another method, a clutch mechanism for adjusting the torque of the motor 12 transmitted to the two blade sections 18 and 19 is included, and when the foreign matter detecting unit detects the foreign matter, the clutch mechanism may be made valid. In such a configuration, since an upper limit value of the torque is lowered when detecting the foreign matter, it is possible to prevent an occurrence of torque enough to cut the wire or nick the blade sections. As the clutch mechanism, for example, a known spring clutch may be used. If the clutch mechanism is invalid (nullified), the torque may be fully transmitted, and if the clutch mechanism is valid, the torque in excess of the allowable quantity of torque transmission may not be transmitted.

In the electric scissors 10 according to the above embodiment, both the two blade sections are a double-edged movable type, but is not limited thereto, the invention can be similarly applied to a single-edged movable type electric scissors 10 in which one blade section is fixed and the other blade section moves.

### (Modified Example of Foreign Matter Detection Operation)

In the above-described embodiment, although the foreign matter detection operation is performed based on the closing angle of the two blade sections 18 and 19 and the amount of change in the current value within the constant time, it is possible to obtain the same effect, even by performing the foreign matter detection operation by the following method as described below in place of this.

### (First Modified Example)

In this modified example, the foreign matter detection operation is performed based on whether the current value is equal to or higher than a predetermined threshold value.

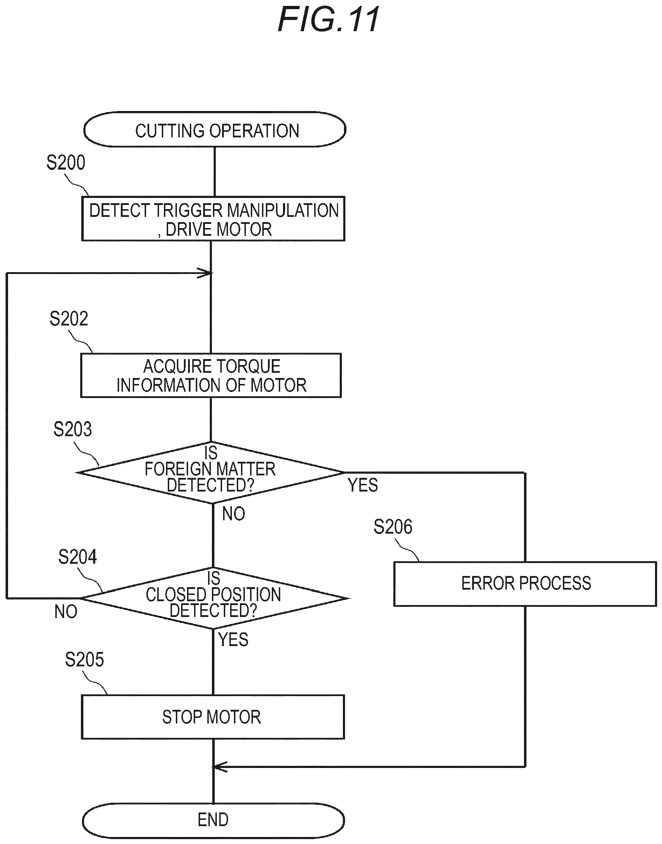

That is, as illustrated in Fig. 11, at step S200, the manipulating member 22 is manipulated, and the motor 12 starts driving.

At step S202, the current detection unit 120 measures the current value at regular intervals. This current value is acquired and used as the torque information of the motor 12 used for the foreign matter detection. The process proceeds to step S203.

At step S203, the foreign matter detection unit checks whether the current value acquired at step S202 exceeds a predetermined threshold value. If the current value exceeds the threshold value, it is determined that the foreign matter is pinched, and the process proceeds to step S206. Meanwhile, when the current value does not exceed the threshold value, the process proceeds to step S204.

If the process proceeds to step S204, it is checked whether two blade sections 18 and 19 are in the completely closed state. When the two blade sections 18 and 19 are detected to be in the completely closed state, the process proceeds to step S205. Meanwhile, the two blade sections 18 and 19 are not in the completely closed state, the process returns to step S202.

When the process proceeds to step S205, the motor 12 is stopped to complete the process.

When the process proceeds to step S206, i.e., when it is determined that the foreign substance is pinched at step S203, a predetermined error process is performed. For example, the motor 12 is stopped, and the motor 12 is reversely rotated at the same time.

In the aforementioned modified example, although the current value is acquired as the torque information of the motor 12, instead of this, by measuring the voltage value supplied to the electric scissors 10, the voltage value may be acquired as the torque information of the motor 12.

### (Second Modified Example)

In this modified example, the foreign matter detection operation is performed based on whether the amount of change in the current value is equal to or higher than a predetermined threshold value.

That is, as illustrated in Fig. 11, at step S200, the manipulating member 22 is manipulated, and the motor 12 starts driving.

At step S202, the current detection unit 120 measures the current value at regular intervals, and the current change calculation unit 130 calculates the amount of change in the current value within a certain period of time based on the current value. The amount of change in the current value is acquired as the torque information of the motor 12 used for the foreign matter detection, and is used. The process proceeds to step S203.

At step S203, the foreign matter detection unit checks whether the amount of change in the current value acquired at step S202 exceeds a predetermined threshold value. If the amount of change in the current value exceeds the threshold value, it is determined that the foreign matter is pinched, and the process proceeds to step S206. Meanwhile, when the amount of change in the current value does not exceed the threshold value, the process proceeds to step S204.

If the process proceeds to step S204, it is checked whether the two blade sections 18 and 19 are in the completely closed state. If the two blade sections 18 and 19 are detected to be in the completely closed state, the process proceeds to step S205. Meanwhile, if the two blade sections 18 and 19 are in the completely closed state, the process returns to step S202.

When the process proceeds to step S205, the motor 12 is stopped to complete the processing.

When the process proceeds to step S206, i.e., when it is determined that the foreign substance is pinched at step S203, a predetermined error process is performed. For example, the motor 12 is stopped, and the motor 12 is reversely rotated at the same time.

### (Third Modified Example)

In this modified example, the foreign matter detection operation is performed based on whether the angle change (angular velocity) of the two blade sections 18 and 19 is equal to or higher than a predetermined threshold value.

That is, as illustrated in Fig. 11, at step S200, the manipulating member 22 is manipulated, and the motor 12 starts driving.

At step S202, based on the information about the amount of rotation of the motor 12 acquired from the rotation determination unit 110, the angular change (angular velocity) in the two blade sections 18 and 19 is estimated. For example, the rotational speed of the motor 12 at a predetermined time is set as the information of the angular velocity. The information of the angular velocity is acquired and used as the torque information of the motor 12 used for the foreign matter detection. Also, the process proceeds to step S203.

At step S203, the foreign matter detection unit checks whether the angular velocity acquired at step S202 is less than a predetermined threshold value. If the angular velocity is less than the threshold value, it is determined that the foreign matter is pinched, and the process proceeds to step S206. Meanwhile, when the angular velocity is equal to or greater than the threshold value, the process proceeds to step S204.

If the process proceeds to step S204, it is checked whether the two blade sections 18 and 19 are in the completely closed state. When the two blade sections 18 and 19 are determined to be in the completely closed state, the process proceeds to step S205. Meanwhile, if the two blade sections 18 and 19 are in the completely closed state, the process returns to step S202.

When the process proceeds to step S205, the motor 12 is stopped to complete the processing.

When the process proceeds to step S206, that is, if it is determined that the foreign substance is pinched at step S203, a predetermined error process is performed. For example, the motor 12 is stopped, and the motor 12 is reversely rotated at the same time.

As described above, in this modified example, if the amount of change (angular velocity) in the angle of the two blade portions 18 and 19 is equal to or greater than a predetermined threshold value, it is determined that the branch is cut, and if the amount of change (angular velocity) is less than a predetermined threshold value, it is determined that the foreign matter is pinched. Therefore, if a decrease in the closing speed of the two blade sections 18 and 19 is slight, the branch is to cut, and if the closing speed of the two blade sections 18 and 19 is greatly reduced, it is possible to determine that the foreign matter is pinched.

### (Fourth Modified Example)

In this modified example, the foreign matter detection operation is performed based on whether the amount of change in the angular speed of the two blade sections 18 and 19 (angular acceleration) is equal to or greater than a predetermined threshold value.

That is, as illustrated in Fig. 11, at step S200, the manipulating member 22 is manipulated, and the motor 12 starts driving.

At step S202, based on the information about the amount of rotation of the motor 12 acquired from the rotation determination unit 110, the amount of change (the angular acceleration) in the angular velocity of the two blade sections 18 and 19 is estimated. For example, the rotational speed of the motor 12 at a predetermined time at a predetermined cycle is acquired, and the angular acceleration is calculated based on the difference with the previously acquired rotational speed of the motor 12. The angular acceleration is acquired and used as torque information of the motor 12 used for the foreign matter detection. Next, the process proceeds to step S203.

At step S203, the foreign matter detection unit checks whether the angular acceleration acquired at step S202 is less than a predetermined threshold value. If the angular acceleration is less than the threshold value, it is determined that the foreign matter is pinched, and the process proceeds to step S206. Meanwhile, if the angular acceleration is equal to or greater than the threshold value, the process proceeds to step S204.

If the process proceeds to step S204, it is checked whether the two blade sections 18 and 19 are in the completely closed state. If the two blade sections 18 and 19 are determined to be in the completely closed state, the process proceeds to step S205. Meanwhile, if the two blade sections 18 and 19 are in the completely closed state, the process returns to step S202.

When the process proceeds step S205, the motor 12 is stopped to complete the processing.

When the process proceeds step S206, that is, if it is determined that the foreign substance is pinched at step S203, a predetermined error process is performed. For example, the motor 12 is stopped and the motor 12 is reversely rotated at the same time.

As described above, in this modified example, if the angular acceleration equal to or greater than a predetermined threshold value, it is determined that the branch is cut, and if the angular acceleration is less than a predetermined threshold value, it is determined the foreign matter is pinched. Therefore, when the closing speed of the two blades 18 and 19 gradually decreases, the branch is cut, and when the closing speed of the two blades 18 and 19 abruptly decreases, the foreign matter can be determined to be pinched

### (Fifth Modified Example)

In this modified example, the foreign matter detection operation is performed based on the closing angle and the current value of the two blade portions 18 and 19.

That is, as illustrated in Fig. 7, at step S100, the manipulating member 22 is manipulated, and the motor 12 starts driving.

At step S101, the rotation determination unit 110 obtains the rotation amount of the motor 12. Next, the process proceeds to step S102.

At step S102, the current detection unit 120 measures the current value at regular intervals. This current value is acquired and used as the torque information of the motor 12 used for the foreign matter detection. Next, the process proceeds to step S103.

At step S103, the current determination unit 140 obtains the information about the amount of rotation of the motor 12 from the rotation determination unit 110 to estimate the closing angles of the two blades 18 and 19. The threshold value is selected from a predetermined threshold data based on the closing angle. The selected threshold value is compared to the current value acquired at step S102. If the current value exceeds the threshold value, it is determined that the foreign matter is pinched, and the process proceeds to step S106. Meanwhile, if the current value does not exceed the threshold value, the process proceeds to step S104.

If the process proceeds to step S104, it is checked whether the two blade sections 18 and 19 are in the completely closed state. When the two blade sections 18 and 19 are determined to be in the completely closed state, the process proceeds to step S105. Meanwhile, if the two blade sections 18 and 19 are in the completely closed state, the process returns to step S101.

When the process proceeds to step S105, the motor 12 is stopped to complete the processing.

If the process proceeds to step S106, that is, if it is determined that the foreign substance is pinched at step S103, a predetermined error process is performed. For example, the motor 12 is stopped and the motor 12 is reversely rotated at the same time.

### (Sixth Modified Example)

In this modified example, the foreign matter detection operation is performed based on the angular change (the angular velocity) in the two blade portions 18 and 19 and the current value.

That is, as illustrated in Fig. 7, at step S100, the manipulating member 22 is manipulated, and the motor 12 starts driving.

At step S101, the angular change (angular velocity) in the two blade sections 18 and 19 is estimated based on information about the amount of rotation of the motor 12 acquired from the rotation determination unit 110. For example, the rotational speed of the motor 12 at a predetermined time is set as the information of the angular velocity. Next, the process proceeds to step S102.

At step S102, the current detection unit 120 measures the current value at regular intervals. Next, the process proceeds to step S103.

At step S103, it is checked whether the angular velocity acquired at step S101 is less than a predetermined threshold and whether the current value acquired at step S102 is equal to or higher than a predetermined threshold value. If the angular velocity is less than the threshold value and the current value is equal to or greater than the threshold value, it is determined that the foreign matter is pinched, and the process proceeds to step S106. Meanwhile, when the angular velocity is equal to or greater than the threshold or the current value is less than the threshold value, the process proceeds to step S104.

If the process proceeds to step S104, it is checked whether the two blade sections 18 and 19 are in the completely closed state. When the two blade sections 18 and 19 are determined to be in the completely closed state, the process proceeds to step S105. Meanwhile, if the two blade sections 18 and 19 are in the completely closed state, the process returns to step S101.

When the process proceeds to step S105, the motor 12 is stopped to complete the processing.

When the process proceeds to step S106, that is, if it is determined that the foreign substance is pinched at step S103, a predetermined error process is performed. For example, the motor 12 is stopped and the motor 12 is reversely rotated at the same time.

### (Seventh Modified Example)

In this modified example, the foreign matter detection operation is performed based on the angular change (the angular velocity) in the two blade portions 18 and 19 and the amount of change in current value.

That is, as illustrated in Fig. 7, at step S100, the manipulating member 22 is manipulated, and the motor 12 starts driving.

At step S101, the angular change (angular velocity) in the two blade sections 18 and 19 is estimated based on information about the amount of rotation of the motor 12 acquired from the rotation determination unit 110. For example, the rotational speed of the motor 12 at a predetermined time is set as the information of the angular velocity. Next, the process proceeds to step S102.

At step S102, the current detection unit 120 measures a current value at regular intervals, and the current change amount calculation unit 130 calculates the amount of change in current value within a fixed time based on the current value. Next, the process proceeds to step S103.

At step S103, it is checked whether the angular velocity acquired at step S101 is less than a predetermined threshold value, and whether the amount of change in the electric current value acquired at step S102 is equal to or higher than a predetermined threshold value. If the angular velocity is less than the threshold value and the amount of change in the current value is equal to or greater than the threshold value, it is determined that the foreign matter is pinched, and the process proceeds to step S106. Meanwhile, when the angular velocity is equal or to greater than the threshold value or the amount of change in the current value is less than the threshold value, the process proceeds to step S104.

If the process proceeds to step S104, it is checked whether the two blade sections 18 and 19 are in the completely closed state. When the two blade sections 18 and 19 are determined to be in the completely closed state, the process proceeds to step S105. Meanwhile, if the two blade sections 18 and 19 are in the completely closed state, the process returns to step S101.

When the process proceeds to step S105, the motor 12 is stopped to complete the processing.

When the process proceeds to step S106, that is, if it is determined that the foreign substance is pinched at step S103, a predetermined error process is performed. For example, the motor 12 is stopped and the motor 12 is reversely rotated at the same time.

### (Eight Modified Example)

In this modified example, the foreign matter detection operation is performed based on the output duty and the current value of the motor 12.

That is, as illustrated in Fig. 11, at step S200, the manipulating member 22 is manipulated, and the motor 12 starts driving.

At step S202, the current detection unit 120 measures the current value at regular intervals. This current value is acquired and used as the torque information of the motor 12 used for the foreign matter detection. Next, the process proceeds to step S203.

At step S203, the threshold value is selected from a predetermined threshold data based on the output duty of the motor 12. The threshold value is set to become higher in a stepwise manner or a stepless manner in proportional to the output duty. It is checked whether the current value acquired at step S202 exceeds the selected threshold value. If the current value exceeds the threshold value, it is determined that the foreign matter is pinched, and the process proceeds to step S206. Meanwhile, if the current value does not exceed the threshold value, the process proceeds to step S204.

If the process proceeds to step S204, it is checked whether the two blade sections 18 and 19 are in the completely closed state. When the two blade sections 18 and 19 are determined to be in the completely closed state, the process proceeds to step S205. Meanwhile, if the two blade sections 18 and 19 are in the completely closed state, the process returns to step S202.

When the process proceeds to step S205, the motor 12 is stopped to complete the processing.

When the process proceeds to step S206, that is, if it is determined that the foreign substance is pinched at step S203, a predetermined error process is performed. For example, the motor 12 is stopped and the motor 12 is reversely rotated at the same time.

If a threshold value is determined by referring to the output duty of the motor 12 in this way, it is possible to enhance the accuracy of foreign matter detection than when only referring to the current value. That is, even when the output duty is the same, if the current value is different, the output of the motor 12 is different. Thus, with reference to both of the current value and the output duty, it is possible to enhance the accuracy of the foreign matter detection.

### (Ninth Modified Example)

In this modified example, the foreign matter detection operation is performed based on the current value and the voltage value.

That is, as illustrated in Fig. 11, at step S200, the manipulating member 22 is manipulated, and the motor 12 starts driving.

At step S202, the current value and the voltage value are measured at regular intervals to calculate the power value (current value × voltage value). The power value is acquired and used as the torque information of the motor 12 used for the foreign matter detection. Next, the process proceeds to step S203.

At step S203, the foreign matter detection unit checks whether the power value acquired at step S202 exceeds a predetermined threshold value. If the power value exceeds the threshold value, it is determined that the foreign matter is pinched, and the process proceeds to step S206. Meanwhile, if the power value does not exceed the threshold value, the process proceeds to step S204.

If the process proceeds to step S204, it is checked whether the two blade sections 18 and 19 are in the completely closed state. When the two blade sections 18 and 19 are determined to be in the completely closed state, the process proceeds to step S205. Meanwhile, if the two blade sections 18 and 19 are in the completely close state, the process returns to step S202.

When the process proceeds to step S205, the motor 12 is stopped to complete the processing.

When the process proceeds to step S206, that is, if it is determined that the foreign substance is pinched at step S203, a predetermined error process is performed. For example, the motor 12 is stopped and the motor 12 is reversely rotated at the same time.

If the foreign matter detection operation is performed based on the current value and the voltage value in this way, even in a machine (a rechargeable tool such as in the present embodiment) in which a voltage value varies depending on the usage situation, since it is possible to correctly grasp the output (cutting load) of the motor, it is possible to enhance the accuracy of foreign matter detection.

## Claims

1. A foreign matter detecting mechanism of electric scissors for detecting pinching of a foreign matter in the electric scissors having blade sections which are interlocked with a rotation of a motor, the mechanism comprising:
a foreign matter detecting unit that detects that the blade sections pinch the foreign matter,
wherein the foreign matter detecting unit detects the foreign matter based on angle information of the blade sections and torque information of the motor,
wherein the torque information of the motor includes a change rate of torque of the motor,
wherein the foreign matter detecting unit selects a threshold from predetermined threshold data according to a closing angle of the blade sections, and
the foreign matter detecting unit compares the threshold to the torque information of the motor to perform the detection of the foreign matter.

2. The foreign matter detecting mechanism of electric scissors according to claim 1,
wherein when the change rate of torque of the motor is less than a predetermined threshold, it is determined that the electric scissors cut a branch, and
when the change rate of torque of the motor is equal to or greater than the predetermined threshold, it is determined that the electric scissors pinch the foreign matter.

3. The foreign matter detecting mechanism of electric scissors according to claim 1 or 2,
wherein the torque information of the motor is estimated based on at least one of a current value, a voltage value and a rotational speed of the motor.

4. The foreign matter detecting mechanism of electric scissors according to any one of claims 1 to 3,
wherein the detection of foreign matter by using the foreign matter detecting unit is nullified until the blade sections are determined to be closed up to a predetermined angle, and
the detection of foreign matter is valid after the blade sections are determined to be closed up to the predetermined angle.

5. The foreign matter detecting mechanism of electric scissors according to any one of claims 1 to 4, further comprising:
a switching unit that switches two modes which include a foreign matter detection mode of executing the detection of the foreign matter and a continuous execution mode of not executing the detection of foreign matter.

6. The foreign matter detecting mechanism of electric scissors according to any one of claims 1 to 5,
wherein when the foreign matter detecting unit detects the foreign matter, the motor is stopped.

7. The foreign matter detecting mechanism of electric scissors according to any one of claims 1 to 5,
wherein when the foreign matter detecting unit detects the foreign matter, the motor is reversely rotated.

8. The foreign matter detecting mechanism of electric scissors according to any one of claims 1 to 5,
wherein when the foreign matter detecting unit detects the foreign matter, an alarm is reported to a user.

9. The foreign matter detecting mechanism of electric scissors according to any one of claims 1 to 5,
wherein when the foreign matter detecting unit detects the foreign matter, a power path is physically cut off so that power of the motor is not transmitted to the blade sections.

10. The foreign matter detecting mechanism of electric scissors according to any one of claims 1 to 5, further comprising:
a clutch mechanism that adjusts the torque of the motor transmitted to the blade sections,
wherein when the foreign matter detecting unit detects the foreign matter, the clutch mechanism is valid.

11. The foreign matter detecting mechanism of electric scissors according to claim 1,
wherein the foreign matter detecting unit detects the foreign matter based on a timing at which the blade sections are closed up to a predetermined angle.

## Patentansprüche

1. Fremdkörperdetektionsmechanismus für eine elektrische Schere zum Erfassen eines Einklemmens eines Fremdkörpers in der elektrischen Schere mit Klingenabschnitten, die bei einer Drehung eines Motors ineinandergreifen, wobei der Mechanismus umfasst:
eine Fremdkörperdetektionseinheit, die erfasst, dass die Klingenabschnitte den Fremdkörper einklemmen,
wobei die Fremdkörperdetektionseinheit den Fremdkörper basierend auf einer Winkelinformation der Klingenabschnitte und einer Drehmomentinformation des Motors erfasst,
wobei die Drehmomentinformation des Motors eine Änderungsrate des Drehmoments des Motors beinhaltet,
wobei die Fremdkörperdetektionseinheit einen Schwellenwert aus vorbestimmten Schwellenwertdaten gemäß einem Schließwinkel der Klingenabschnitte auswählt, und
wobei die Fremdkörperdetektionseinheit den Schwellenwert mit der Drehmomentinformation des Motors vergleicht, um die Erfassung des Fremdkörpers durchzuführen.

2. Fremdkörperdetektionsmechanismus einer elektrischen Schere nach Anspruch 1,
wobei, wenn die Änderungsrate des Drehmoments des Motors kleiner als ein vorgegebener Schwellenwert ist, bestimmt wird, dass die elektrische Schere einen Ast schneidet, und
wenn die Änderungsrate des Drehmoments des Motors gleich oder größer als der vorgegebene Schwellenwert ist, bestimmt wird, dass die elektrische Schere den Fremdkörper einklemmt.

3. Fremdkörperdetektionsmechanismus einer elektrischen Schere nach Anspruch 1 oder 2,
wobei die Drehmomentinformation des Motors basierend auf mindestens einem von einem Stromwert, einem Spannungswert und einer Drehzahl des Motors geschätzt wird.

4. Fremdkörperdetektionsmechanismus einer elektrischen Schere nach einem der Ansprüche 1 bis 3,
wobei das Erfassen eines Fremdkörpers unter Verwendung der Fremdkörperdetektionseinheit unwirksam ist, bis bestimmt worden ist, dass die Klingenabschnitte bis zu einem vorbestimmten Winkel geschlossen sind, und
wobei die Fremdkörpererkennung wirksam ist, nachdem bestimmt worden ist, dass die Klingenabschnitte bis zum vorbestimmten Winkel geschlossen sind.

5. Fremdkörperdetektionsmechanismus einer elektrischen Schere nach einem der Ansprüche 1 bis 4, ferner umfassend:
eine Schalteinheit, die zwei Modi schaltet, die einen Fremdkörperdetektionsmodus zum Ausführen der Erkennung von Fremdkörpern und einen kontinuierlichen Ausführungsmodus des Nichtdurchführens der Erkennung von Fremdkörpern beinhalten.

6. Fremdkörperdetektionsmechanismus einer elektrischen Schere nach einem der Ansprüche 1 bis 5,
wobei, wenn die Fremdkörperdetektionseinheit den Fremdkörper erfasst, der Motor gestoppt wird.

7. Fremdkörperdetektionsmechanismus einer elektrischen Schere nach einem der Ansprüche 1 bis 5,
wobei, wenn die Fremdkörperdetektionseinheit den Fremdkörper erfasst, der Motor umgekehrt rotiert.

8. Fremdkörperdetektionsmechanismus einer elektrischen Schere nach einem der Ansprüche 1 bis 5,
wobei, wenn die Fremdkörperdetektionseinheit den Fremdkörper erfasst, ein Alarm an einen Benutzer gemeldet wird.

9. Fremdkörperdetektionsmechanismus einer elektrischen Schere nach einem der Ansprüche 1 bis 5,
wobei, wenn die Fremdkörperdetektionseinheit den Fremdkörper erfasst, ein Strompfad physikalisch unterbrochen wird, so dass die Leistung des Motors nicht auf die Klingenabschnitte übertragen wird.

10. Fremdkörperdetektionsmechanismus einer elektrischen Schere nach einem der Ansprüche 1 bis 5, ferner umfassend:
einen Kupplungsmechanismus, der das Drehmoment des Motors, der auf die Klingenabschnitte übertragen wird, einstellt,
wobei, wenn die Fremdkörperdetektionseinheit den Fremdkörper erfasst, der Kupplungsmechanismus wirksam ist.

11. Fremdkörperdetektionsmechanismus einer elektrischen Schere nach Anspruch 1,
wobei die Fremdkörperdetektionseinheit den Fremdkörper basierend auf einem Zeitpunkt erfasst, an dem die Klingenabschnitte bis zu einem vorbestimmten Winkel geschlossen sind.

## Revendications

1. Mécanisme de détection de corps étranger de ciseaux électriques pour détecter un pincement d'un corps étranger dans les ciseaux électriques ayant des sections de lame qui sont verrouillées avec une rotation d'un moteur, le mécanisme comprenant :
une unité de détection de corps étranger qui détecte que les sections de lame pincent le corps étranger,
dans lequel l'unité de détection de corps étranger détecte le corps étranger d'après des informations d'angle des sections de lame et des informations de couple du moteur,
dans lequel les informations de couple du moteur comportent une vitesse de changement de couple du moteur,
dans lequel l'unité de détection de corps étranger sélectionne un seuil à partir de données de seuil prédéterminées selon un angle de fermeture des sections de lame, et
l'unité de détection de corps étranger compare le seuil aux informations de couple du moteur pour réaliser la détection du corps étranger.

2. Mécanisme de détection de corps étranger de ciseaux électriques selon la revendication 1,
dans lequel lorsque la vitesse de changement de couple du moteur est inférieure à un seuil prédéterminé, on détermine que les ciseaux électriques coupent une branche, et
lorsque la vitesse de changement de couple du moteur est supérieure ou égale au seuil prédéterminé, on détermine que les ciseaux électriques pincent le corps étranger.

3. Mécanisme de détection de corps étranger de ciseaux électriques selon la revendication 1 ou 2,
dans lequel les informations de couple du moteur sont estimées d'après au moins l'une d'une valeur de courant, d'une valeur de tension et d'une vitesse de rotation du moteur.

4. Mécanisme de détection de corps étranger de ciseaux électriques selon l'une quelconque des revendications 1 à 3,
dans lequel la détection de corps étranger en utilisant l'unité de détection de corps étranger est invalidée jusqu'à ce que les sections de lame soient déterminées comme étant refermées à un angle prédéterminé, et
la détection de corps étranger est valide après que les sections de lame sont déterminées comme étant refermées à l'angle prédéterminé.

5. Mécanisme de détection de corps étranger de ciseaux électriques selon l'une quelconque des revendications 1 à 4, comprenant en outre :
une unité de commutation qui commute deux modes qui comportent un mode de détection de corps étranger exécutant la détection du corps étranger et un mode d'exécution continu n'exécutant pas la détection de corps étranger.

6. Mécanisme de détection de corps étranger de ciseaux électriques selon l'une quelconque des revendications 1 à 5,
dans lequel lorsque l'unité de détection de corps étranger détecte le corps étranger, le moteur est arrêté.

7. Mécanisme de détection de corps étranger de ciseaux électriques selon l'une quelconque des revendications 1 à 5,
dans lequel lorsque l'unité de détection de corps étranger détecte le corps étranger, le moteur est mis en rotation inversée.

8. Mécanisme de détection de corps étranger de ciseaux électriques selon l'une quelconque des revendications 1 à 5,
dans lequel lorsque l'unité de détection de corps étranger détecte le corps étranger, une alarme est signalée à un utilisateur.

9. Mécanisme de détection de corps étranger de ciseaux électriques selon l'une quelconque des revendications 1 à 5,
dans lequel lorsque l'unité de détection de corps étranger détecte le corps étranger, un chemin d'alimentation est coupé physiquement de sorte qu'une alimentation du moteur ne soit pas transmise aux sections de lame.

10. Mécanisme de détection de corps étranger de ciseaux électriques selon l'une quelconque des revendications 1 à 5, comprenant en outre :
un mécanisme d'embrayage qui ajuste le couple du moteur transmis aux sections de lame,
dans lequel lorsque l'unité de détection de corps étranger détecte le corps étranger, le mécanisme d'embrayage est valide.

11. Mécanisme de détection de corps étranger de ciseaux électriques selon la revendication 1,
dans lequel l'unité de détection de corps étranger détecte le corps étranger d'après un moment auquel les sections de lame sont refermées à un angle prédéterminé.
